# EUROPÄISCHE PATENTANMELDUNG

(11) **EP 1 724 160 A1**
(43) Veröffentlichungstag der Anmeldung: **22.11.2006**
(21) Anmeldenummer: 06111559.8
(22) Anmeldetag: 22.03.2006
(51) Int. Cl.: B60R 21/0136

(54) **Verfahren und Vorrichtung zur Aktivierung von äußeren Schutzmitteln**

(30) Priorität: 17.05.2005 DE 102005022679
(71) Anmelder: ROBERT BOSCH GMBH, 70442 Stuttgart (DE)
(72) Erfinder: Lich, Thomas, 71409 Schwaikheim (DE); Mack, Frank, 70376 Stuttgart (DE)

(57) **Zusammenfassung**

Die Erfindung betrifft ein Verfahren zur Aktivierung von äußeren Schutzmitteln, welches zur Kollisionserkennung und zur Objektklassifikation Kollisionssensordaten erfasst und auswertet, wobei die äußeren Schutzmittel (30) in Abhängigkeit von der Kollisionserkennung und der Objektklassifizierung aktiviert werden. Erfindungsgemäß werden eine oder mehrere fahrdynamische Größen (LW, ωₓ, ω_{y}, ω_{z}, aₓ, a_{y}, a_{z}, β, vₓ , v_{y}, v_{z}) erfasst und/oder ermittelt und zur Erkennung einer Fahrsituation ausgewertet, wobei bei einer erkannten kritischen Fahrsituation für die Kollisionserkennung und die Objektklassifikation vorgebbare Parameter empfindlicher eingestellt werden.

## Beschreibung

### Stand der Technik

Die Erfindung geht aus von einem Verfahren zur Aktivierung von äußeren Schutzmitteln der Gattung des unabhängigen Patentanspruchs 1 und von einer zugehörigen Vorrichtung.

Bekannte Verfahren zur Aktivierung einer Fußgängerschutzvorrichtung werten zur Erkennung einer Kollision mit einem Fußgänger Sensordaten von mindestens einer Sensoreinheit aus. Die Sensordaten werden bei der Auswertung in der Regel mit mindestens einem vorgegebenen Schwellwert verglichen. In Abhängigkeit von dem Vergleichsergebnis wird die Fußgängerschutzvorrichtung aktiviert.

Zahlen aus den USA belegen die Bedeutung der passiven Sicherheit bei Fahrzeugüberschlägen. Im Jahr 1998 war die Hälfte aller tödlichen Einzelfahrzeugunfälle auf einen Überschlag zurückzuführen. Im gesamten Unfallgeschehen nimmt der Fahrzeugüberschlag einen Anteil von rund 20 Prozent ein.

Bekannte Verfahren zur Überschlagserkennung beruhen beispielsweise auf der Auswertung eines Drehratensensors und zwei Beschleunigungssensoren, welche in einem zentralen Airbagsteuergerät integriert sind. Der Drehratensensor ermittelt nach dem Kreiselprinzip die Rotationsgeschwindigkeit um die Fahrzeuglängsachse und die Beschleunigungssensoren messen zusätzlich die Fahrzeugbeschleunigung in Quer- und Hochrichtung. Im Hauptalgorithmus wird dann die Drehrate ausgewertet. Mit den Messwerten der Beschleunigungssensoren lässt sich zum einen die Art des Überschlags erkennen, zum anderen dienen diese Werte der Plausibilitätsprüfung. Erkennt der Drehratenalgorithmus einen Überschlag, werden die Sicherheitsvorrichtungen nur bei gleichzeitiger Freigabe durch die Plausibilitätskontrolle aktiviert.

Bei einem anderen bekannten Verfahren wird eine rechtzeitige Auslöseentscheidung bei Überschlägen mit hoher lateraler Beschleunigung dadurch ermöglicht, dass ein Schwimmwinkel und die laterale Geschwindigkeit des Fahrzeugs einbezogen werden. Bei einem bekannten Verfahren zur erweiterten Überrollerkennung wird aus einer Gierrate und der Fahrzeuggeschwindigkeit in longitudinaler Richtung unter Berücksichtigung der lateralen Beschleunigung eine Schätzung für die laterale Geschwindigkeit durchgeführt, welche beim seitlichen Abdriften in den Grünstreifen ein Maß für die Überrollwahrscheinlichkeit des Fahrzeugs darstellt. Zur Bestimmung der lateralen Geschwindigkeit wird ebenfalls der so genannte Schwimmwinkel herangezogen.

### Vorteile der Erfindung

Das erfindungsgemäße Verfahren zur Aktivierung von äußeren Schutzmitteln mit den Merkmalen des unabhängigen Patentanspruchs 1 oder die zugehörige Vorrichtung zur Aktivierung von äußeren Schutzmitteln mit den Merkmalen des unabhängigen Patentanspruchs 8 haben demgegenüber den Vorteil, dass bei einer kritischen Fahrsituation, welche durch eine Auswertung von einer oder mehreren erfassten und/oder ermittelten fahrdynamischen Größen erkannt wird, vorgegebene Parameter für eine Kollisionserkennung und eine Objektklassifikation zur Aktivierung der äußeren Schutzmittel empfmdlicher eingestellt werden können. Dadurch wird eine sichere und schnellere bzw. frühere Aktivierung der äußeren Schutzmittel, welche beispielsweise Schutzvorrichtungen für andere Verkehrsteilnehmer wie Fußgänger, Radfahrer, Motorradfahrer usw. umfassen, im Falle von Folgeunfällen nach oder während kritischer Fahrsituationen gewährleistet, bei welchen der Fahrer die Kontrolle über das Fahrzeug verlieren kann und ein Schutz der anderen Verkehrsteilnehmer durch den Fahrer nicht mehr gewährleistet werden kann. Somit stellt das erfindungsgemäße Verfahren in vorteilhafter Weise bei einem erhöhten Gefährdungspotential für Fußgänger und andere Verkehrsteilnehmer eine sichere und frühzeitige Aktivierung der äußeren Schutzmittel sicher. Dadurch wird in vorteilhafter Weise die Crashkompatibilität zwischen den potentiellen Crashteilnehmern verbessert und das Verletzungsrisiko für die anderen Verkehrsteilnehmer in vorteilhafter Weise verringert. Die äußeren Schutzmittel umfassen beispielsweise eine reversibel anhebbare Motorhaube, Vorrichtungen für Strukturveränderungen der Fahrzeugaußenhaut, Fußgängerairbags usw.

Durch die in den abhängigen Ansprüchen aufgeführten Maßnahmen und Weiterbildungen sind vorteilhafte Verbesserungen des im unabhängigen Patentanspruchs 1 angegebenen Verfahrens zur Aktivierung von äußeren Schutzmitteln oder der im unabhängigen Patentanspruch 8 angegebenen Vorrichtung zur Aktivierung von äußeren Schutzmitteln möglich.

Besonders vorteilhaft ist, dass die für die Kollisionserkennung und die Objektklassifikation vorgebbaren Parameter mindestens einen Schwellwert umfassen, welcher für die Dauer der kritischen Fahrsituation empfindlicher eingestellt werden und bei einer erkannten normalen Fahrsituation wieder auf den vorgegebenen Wert zurückgesetzt werden kann.

Die erfassten und/oder ermittelten fahrdynamischen Größen zur Ermittlung der augenblicklichen Fahrsituation umfassen beispielsweise einen Lenkwinkel und/oder eine Wankrate und/oder eine Nickrate und/oder eine Gierrate und/oder eine Beschleunigung in Richtung der Fahrzeuglängsachse und/oder eine Beschleunigung in lateraler Fahrzeugrichtung und/oder eine Beschleunigung in vertikaler Fahrzeugrichtung und/oder einen Schwimmwinkel des Fahrzeug und/oder eine Fahrzeuggeschwindigkeit entlang der Fahrzeuglängsachse und/oder eine Fahrzeuggeschwindigkeit entlang der Fahrzeugquerachse und/oder eine Fahrzeuggeschwindigkeit entlang der Fahrzeughochachse. Die fahrdynamischen Größen können direkt von entsprechenden Sensoreinheiten erfasst und/oder ermittelt werden und/oder in aufbereiteter Form von Fahrzeugsystemen zur Verfügung gestellt werden.

Eine kritische Fahrsituation kann in vorteilhafter Weise durch einen aufbauenden Schwimmwinkel und/oder eine erhöhte Fahrzeuggeschwindigkeit entlang der Fahrzeugquerachse, welche auch als Lateralgeschwindigkeit bezeichnet wird, und/oder bei einer Vollbremsung erkannt werden. Somit können die Lateralgeschwindigkeit und/oder der Schwimmwinkel als erste Größe für die Aktivierung der äußeren Schutzmittel verwendet werden.

Zur Erkennung der kritischen Fahrsituation können in vorteilhafter Weise Daten und/oder Informationen von im Fahrzeug implementierten Verfahren und/oder Systemen ausgewertet werden, wodurch eine zusätzliche Sensoreinheit zur Erfassung und/oder Ermittelung der fahrdynamischen Größen eingespart werden kann und das erfindungsgemäße Verfahren relativ kostengünstig umgesetzt werden kann. So können beispielsweise Daten und/oder Informationen eines Überschlagserkennungsverfahrens und/oder eines Auslöseverfahrens für eine Insassenschutzvorrichtung und/oder eines Fahrdynamiksystems und/oder einer vorausschauenden Sensorik und/oder einer Reifenüberwachung ausgewertet werden. Die vorausschauende Sensorik zur Überwachung einer Fahrzeugumgebung umfasst beispielsweise eine Ultraschallsensorik, ein Radarsystem, ein Lidarsystem, ein Videosystem und/oder andere bildgebende Systeme usw.

Weiterhin ist es von Vorteil, dass die Kollisionssensordaten und/oder die fahrdynamischen Größen direkt und/oder in aufbereiteter Form und/oder die Information über die erkannte kritische Fahrsituation zur Plausibilisierung der Auslöseentscheidung für die äußeren Schutzmittel ausgewertet werden können. Durch die Verwendung der Information über die erkannte kritische Fahrsituation kann in vorteilhafter Weise die Plausibilisierung der Auslöseentscheidung für die äußeren Schutzmittel schneller abgeschlossen werden.

Die erfindungsgemäße Vorrichtung zur Aktivierung von äußeren Schutzmitteln umfasst eine Auswerte- und Steuereinheit, welche zur Kollisionserkennung und zur Objektklassifikation Kollisionssensordaten von mindestens einer Kollisionssensoreinheit erfasst und auswertet, wobei die Auswerte- und Steuereinheit die äußeren Schutzmittel in Abhängigkeit von der Kollisionserkennung und der Objektklassifizierung aktiviert. Eine Vorrichtung zur Fahrsituationserkennung wertet eine oder mehrere erfasste und/oder ermittelte fahrdynamische Größen aus und übermittelt das Auswerteergebnis an die Auswerte- und Steuereinheit, welche bei einer erkannten kritischen Fahrsituation vorgebbare Parameter für die Kollisionserkennung und die Objektklassifikation empfindlicher einstellt. Dadurch kann in vorteilhafter Weise eine sichere und schnellere bzw. frühere Aktivierung der äußeren Schutzmittel im Falle von Folgeunfällen nach oder während kritischer Fahrsituationen gewährleistet werden.

### Zeichnung

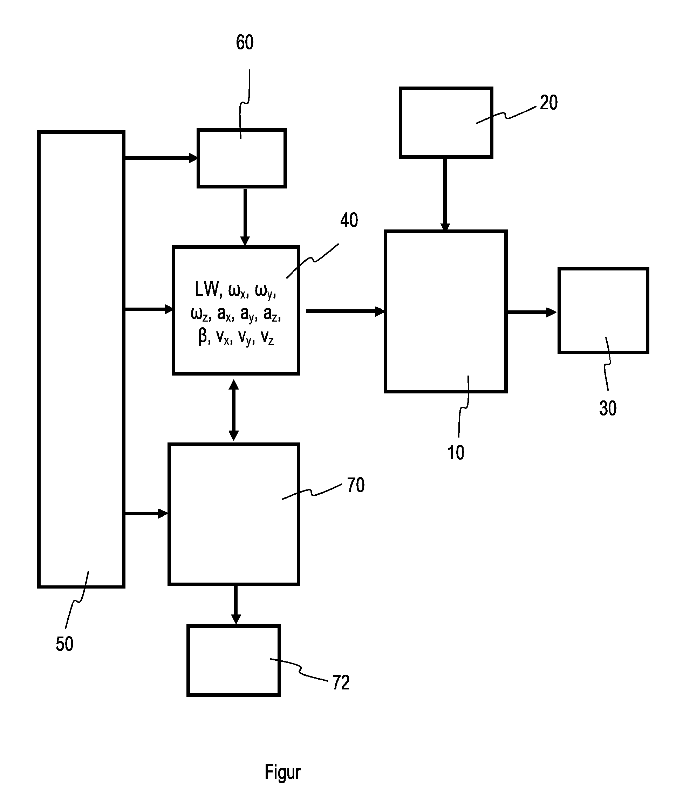

Ein Ausführungsbeispiel der Erfindung ist in der Zeichnung dargestellt und wird in der nachfolgenden Beschreibung näher erläutert. Die einzige Figur zeigt ein schematisches Blockdiagramm einer Vorrichtung zur Aktivierung von äußeren Schutzmitteln.

### Beschreibung

Wie aus der Figur ersichtlich ist, umfasst eine erfindungsgemäße Vorrichtung zur Aktivierung von äußeren Schutzmitteln 30, welche beispielsweise eine reversibel anhebbare Motorhaube, Vorrichtungen für Strukturveränderungen der Fahrzeugaußenhaut, Fußgängerairbags usw. umfassen, eine Auswerte- und Steuereinheit 10, welche zur Kollisionserkennung und zur Objektklassifikation Kollisionssensordaten von mindestens einer Kollisionssensoreinheit 20 auswertet, deren Sensoren beispielsweise in einem Stoßfänger und/oder im Motorraum angeordnet sind, eine Vorrichtung 40 zur Fahrsituationserkennung, welche eine oder mehrere erfasste und/oder ermittelte fahrdynamische Größen LW, ωₓ, ω_{y}, ω_{z}, aₓ, a_{y}, a_{z}, β, vₓ, v_{y}, v_{z} auswertet und das Auswerteergebnis an die Auswerte- und Steuereinheit 10 übermittelt. Die fahrdynamischen Größen umfassen beispielsweise einen Lenkwinkel LW und/oder eine Wankrate ωₓ und/oder eine Nickrate ω_{y} und/oder eine Gierrate ω_{z} und/oder eine Beschleunigung aₓ in Richtung der Fahrzeuglängsachse und/oder eine Bescheunigung a_{y} in lateraler Fahrzeugrichtung und/oder eine Beschleunigung a_{z} in vertikaler Fahrzeugrichtung und/oder einen Schwimmwinkel β des Fahrzeug und/oder eine Fahrzeuggeschwindigkeit vₓ entlang der Fahrzeuglängsachse und/oder eine Fahrzeuggeschwindigkeit v_{y} entlang der Fahrzeugquerachse bzw. eine Lateralgeschwindigkeit und/oder eine Fahrzeuggeschwindigkeit v_{z} entlang der Fahrzeughochachse.

Die fahrdynamischen Größen LW, ωₓ, ω_{y}, ω_{z}, aₓ, a_{y}, a_{z}, β, vₓ, v_{y}, v_{z} können der Vorrichtung 40 zur Fahrsituationserkennung über mindestens eine Sensoreinheit 50, welche die Größen direkt erfasst und/oder ermittelt, und/oder über mindestens ein Fahrzeugsystem 60, 70 unverändert und/oder in aufbereiteter Form zur Verfügung gestellt werden. Zur Erkennung einer kritischen Fahrsituation wertet die Vorrichtung 40 zur Fahrsituationserkennung beispielsweise die Daten und/oder Informationen eines Insassenschutzsystems 70, welches ein Überschlagserkennungsverfahren und/oder ein Auslöseverfahren für eine Insassenschutzvorrichtung 72 ausführt, und/oder eines Fahrdynamiksystems 60 aus, beispielsweise eines elektronischen Stabilisierungssystems (ESP-System). Zusätzlich können Daten und/oder Informationen einer nicht dargestellten vorausschauenden Sensorik, welche beispielsweise eine Ultraschallsensorik, ein Radarsystem, ein Lidarsystem, ein Videosystem und/oder andere bildgebende Systeme usw. umfasst, und/oder eines Reifenüberwachungsverfahrens ausgewertet werden.

Gemäß dem erfindungsgemäßen Verfahren zur Aktivierung der äußeren Schutzmittel, wertet die Auswerte- und Steuereinheit 10 zur Kollisionserkennung und zur Objektklassifikation die Kollisionssensordaten der Sensoreinheit 20 aus. Zur Kollisionserkennung und zur Objektklassifizierung können mehrere Parameter vorgegeben werden, mit welchen die aktuell ermittelten Kollisionsdaten bei der Auswertung verglichen bzw. in Bezug gesetzt werden können So kann beispielsweise mindestens ein Schwellwert vorgegeben werden, mit welchem die aktuellen Kollisionsdaten verglichen werden. Erreichen oder übersteigen die Kollisionssensordaten den mindestens einen Schwellwert, dann erkennt die Auswerte- und Steuereinheit 10 eine Kollision mit einem Objekt, z.B. mit einem Fußgänger, und aktiviert die äußeren Schutzmittel 30, welche Schutzvorrichtungen für andere Verkehrsteilnehmer wie Fußgänger, Radfahrer, Motorradfahrer usw. umfassen können. Wie oben bereits ausgeführt ist, wertet die Vorrichtung 40 zur Fahrsituationserkennung eine oder mehrere der erfassten und/oder ermittelten fahrdynamischen Größen LW, ωₓ, ω_{y}, ω_{z}, aₓ, a_{y}, a_{z}, β, vₓ, v_{y}, v_{z} aus und erkennt beispielsweise bei einem aufbauenden Schwimmwinkel β und/oder bei einer erhöhten Lateralgeschwindigkeit v_{y} und/oder bei einer Vollbremsung eine kritische Fahrsituation. In Reaktion auf die von der Vorrichtung 40 zur Fahrsituationserkennung erkannte kritische Fahrsituation, stellt die Auswerte- und Steuereinheit 10 die vorgebbaren Parameter, z.B. den mindestens einen Schwellwert, für die Auswertung der Kollisionssensordaten zur Kollisionserkennung und zur Objektklassifikation empfindlicher ein, beispielsweise durch eine Absenkung der auslöserelevanten Schwellwerte. Dadurch wird eine sichere und schnellere Aktivierung der äußeren Schutzmittel im Falle von Folgeunfällen während oder nach der kritischen Fahrsituation gewährleistet. Die Parameter bzw. Schwellwerte werden nur für die Dauer der kritischen Fahrsituation empfindlicher eingestellt und bei einer anschließend erkannten normalen Fahrsituation wieder auf die vorgegebenen Werte zurückgesetzt. Somit trifft das erfindungsgemäße Verfahren zur Aktivierung der äußeren Schutzmittel 30 die Auslöseentscheidung für die äußeren Schutzmittel 30 unter Zuhilfenahme von Fahrdynamikgrößen, welche im Falle eines sicherheitskritischen Fahrverhaltens des Fahrzeugs auftreten, in Kombination mit den Kollisionssensordaten von der Kollisionssensoreinheit 20. Durch die Verwendung von Fahrdynamikdaten, welche über Sensorsignale direkt verfügbar sind oder aber in aufbereiteter Form von einem anderen Fahrzeugsystem, z.B. einem ESP-System, über einen Fahrzeugbus zur Verfügung gestellt werden, können aktive Sicherheitssysteme und passive Sicherheitssysteme auch für den Schutz von anderen Verkehrsteilnehmern, wie Fußgängern, Radfahrer, Motorradfahrer usw., außerhalb der Fahrgastzelle kombiniert werden.

Zusätzlich können die Sensordaten zur Kollisionserkennung und/oder die fahrdynamischen Größen LW, ωₓ, ω_{y}, ω_{z}, aₓ, a_{y}, a_{z}, β, vₓ, v_{y}, v_{z} direkt und/oder in aufbereiteter Form und/oder die Information über die erkannte kritische Fahrsituation zur Plausibilisierung der Auslöseentscheidung für die äußeren Schutzmittel 30 ausgewertet werden. Durch die Verwendung der Information über die erkannte kritische Fahrsituation kann in vorteilhafter Weise die Plausibilisierung der Auslöseentscheidung für die äußeren Schutzmittel 30 schneller abgeschlossen werden.

## Patentansprüche

1. Verfahren zur Aktivierung von äußeren Schutzmitteln, welches zur Kollisionserkennung und zur Objektklassifikation Kollisionssensordaten erfasst und auswertet, wobei die äußeren Schutzmittel (30) in Abhängigkeit von der Kollisionserkennung und der Objektklassifikation aktiviert werden, **dadurch gekennzeichnet, dass** eine oder mehrere fahrdynamische Größen (LW, ωₓ, ω_{y}, ω_{z}, aₓ, a_{y}, a_{z}, β, vₓ, v_{y}, v_{z}) erfasst und/oder ermittelt und zur Erkennung einer Fahrsituation ausgewertet werden, wobei bei einer erkannten kritischen Fahrsituation für die Kollisionserkennung und die Objektklassifikation vorgebbare Parameter empfindlicher eingestellt werden.

2. Verfahren nach Anspruch 1, **dadurch gekennzeichnet, dass** die für die Kollisionserkennung und die Objektklassifikation vorgebbaren Parameter mindestens einen Schwellwert umfassen, welcher für die Dauer der kritischen Fahrsituation empfindlicher eingestellt wird und bei einer erkannten normalen Fahrsituation wieder auf den vorgegebenen Werte zurückgesetzt wird.

3. Verfahren nach Anspruch 1 oder 2, **dadurch gekennzeichnet, dass** die erfassten und/oder ermittelten fahrdynamischen Größen (LW, ωₓ, ω_{y}, ω_{z}, aₓ, a_{y}, a_{z}, β, vₓ, v_{y}, v_{z}) einen Lenkwinkel (LW) und/oder eine Wankrate (ωₓ) und/oder eine Nickrate (ω_{y}) und/oder (eine Gierrate (ω_{z}) und/oder eine Beschleunigung (aₓ) in Richtung der Fahrzeuglängsachse und/oder eine Bescheunigung (a_{y}) in lateraler Fahrzeugrichtung und/oder eine Beschleunigung (a_{z}) in vertikaler Fahrzeugrichtung und/oder einen Schwimmwinkel (β) des Fahrzeug und/oder eine Fahrzeuggeschwindigkeit (vₓ) entlang der Fahrzeuglängsachse und/oder eine Fahrzeuggeschwindigkeit (v_{y}) entlang der Fahrzeugquerachse und/oder eine Fahrzeuggeschwindigkeit (v_{z}) entlang der Fahrzeughochachse umfassen.

4. Verfahren nach einem der Ansprüche 1 bis 3, **dadurch gekennzeichnet, dass** eine kritische Fahrsituation bei einem aufbauenden Schwimmwinkel (β) und/oder einer erhöhten Fahrzeuggeschwindigkeit (v_{y}) entlang der Fahrzeugquerachse und/oder bei einer Vollbremsung erkannt wird.

5. Verfahren nach einem der Ansprüche 1 bis 4, **dadurch gekennzeichnet, dass** die fahrdynamischen Größen (LW, ωₓ, ω_{y}, ω_{z}, ax, a_{y}, a_{z}, β, vₓ, v_{y}, v_{z}) direkt von entsprechenden Sensoreinheiten (50) erfasst und/oder ermittelt werden und/oder in aufbereiteter Form von Fahrzeugsystemen (60, 70) zur Verfügung gestellt werden.

6. Verfahren nach einem der Ansprüche 1 bis 5, **dadurch gekennzeichnet, dass** zur Erkennung der kritischen Fahrsituation Daten und/oder Informationen eines Überschlagserkennungsverfahrens und/oder eines Auslöseverfahrens für eine Insassenschutzvorrichtung (72) und/oder eines Fahrdynamiksystems (60) und/oder einer vorausschauenden Sensorik und/oder einer Reifenüberwachung ausgewertet werden.

7. Verfahren nach einem der Ansprüche 1 bis 6, **dadurch gekennzeichnet, dass** die Sensordaten zur Kollisionserkennung und/oder die fahrdynamischen Größen (LW, ωₓ, ω_{y}, ω_{z}, aₓ, a_{y}, a_{z}, β, vₓ, v_{y}, v_{z}) direkt und/oder in aufbereiteter Form und/oder die Information über die erkannte kritische Fahrsituation zur Plausibilisierung der Auslöseentscheidung für die Fußgängerschutzvorrichtung (30) ausgewertet werden.

8. Vorrichtung zur Aktivierung von äußeren Schutzmitteln, insbesondere zur Durchführung des Verfahrens nach einem der Ansprüche 1 bis 7, mit einer Auswerte- und Steuereinheit (10), welche zur Kollisionserkennung und zur Objektklassifikation Kollisionssensordaten von mindestens einer Kollisionssensoreinheit (20) erfasst und auswertet, wobei die Auswerte- und Steuereinheit (10) die äußeren Schutzmittel (30) in Abhängigkeit von der Kollisionserkennung und der Objektklassifizierung aktiviert, **gekennzeichnet durch** eine Vorrichtung (40) zur Erkennung einer Fahrsituation, welche eine oder mehrere erfasste und/oder ermittelte fahrdynamische Größen (LW, ωₓ, ω_{y}, ω_{z}, aₓ, a_{y}, a_{z}, β, vₓ, v_{y}, v_{z}) auswertet und das Auswerteergebnis an die Auswerte- und Steuereinheit (10) übermittelt, welche bei einer erkannten kritischen Fahrsituation vorgebbare Parameter für die Kollisionserkennung und die Objektklassifikation empfindlicher einstellt.

9. Vorrichtung nach Anspruch 8, **gekennzeichnet durch** mindestens eine Sensoreinheit (50) zur direkten Erfassung und/oder Ermittelung der fahrdynamischen Größen (LW, ωₓ, ω_{y}, ω_{z}, aₓ, a_{y}, a_{z}, β, vₓ, v_{y}, v_{z}) und/oder mindestens einem Fahrzeugsystem (60, 70), welches die fahrdynamischen Größen (LW, ωₓ, ω_{y}, ω_{z}, aₓ, a_{y}, a_{z}, β, vₓ, v_{y}, v_{z}) in aufbereiteter Form von zur Verfügung stellt.

10. Vorrichtung nach Anspruch 8 oder 9, **dadurch gekennzeichnet, dass** die Sensoren der Kollisionssensoreinheit (20) in einem Stoßfänger und/oder im Motorraum angeordnet sind.
